# EUROPEAN PATENT APPLICATION

(11) **EP 2 667 230 A1**
(43) Date of publication of application: **27.11.2013**
(21) Application number: 12749810.3
(22) Date of filing: 20.02.2012
(51) Int. Cl.: G02B 6/293, G02B 6/32, G02B 6/35, H04J 14/02

(54) **WAVELENGTH-DIVISION MULTIPLEXER, OPTICAL SWITCH APPARATUS, AND OPTICAL SWITCH CONTROL METHOD**

(30) Priority: 21.02.2011 CN 201110042323
(71) Applicant: Huawei Technologies Co., Ltd., Shenzhen, Guangdong 518129 (CN)
(72) Inventor: WANG, Shijun, Shenzhen Guangdong 518129 (CN); WEN, Yunsheng, Shenzhen Guangdong 518129 (CN); ZHAO, Xueshan, Shenzhen Guangdong 518129 (CN)
(74) Representative: Pfenning, Meinig & Partner GbR
(86) International application number: PCT/CN2012/071325
(87) International publication number: WO 2012/113317

(57) **Abstract**

Embodiments of the present invention provide a WDM, an optical switch device and a control method of an optical switch. The WDM includes three ports: a common port, a pass port and a reflection port, the three ports each include an optical fiber array and a micro lens array matching the optical fiber array; an optical signal output from any optical fiber in a first optical fiber array of the common port is transmitted to a filter after passing through a corresponding micro lens in a first micro lens array of the common port; transmitted light of the optical signal enters a corresponding micro lens in a second micro lens array of the pass port after passing through the filter, and then the light is output by a corresponding optical fiber in a second optical fiber array of the pass port; reflected light of the optical signal enters a corresponding micro lens in a third micro lens array of the reflection port after being reflected by the filter, and then the light is output by a corresponding optical fiber in a third optical fiber array of the reflection port. The number of wavelength division multiplexers in an optical network can be reduced by the embodiments of the present invention.

## Description

### FIELD OF THE INVENTION

The present invention relates to the field of optical fiber communication technologies, and in particular, to a wavelength division multiplexer, an optical switch device and a method for controlling an optical switch.

### BACKGROUND OF THE INVENTION

An optical switch is an optical device with one or more selectable transmission ports, and for interconversion or logic operations of optical signals in optical transmission lines or integrated optical circuits. The optical switch usually selects a certain channel through a control system. For example, a 1×4 optical switch has 1 input port and 4 output ports, and while working, a light beam enters the input port, and 4 instructions are available to control a certain channel among the 4 output ports for outputting in this case, so as to implement the connection between the channel and an input channel.

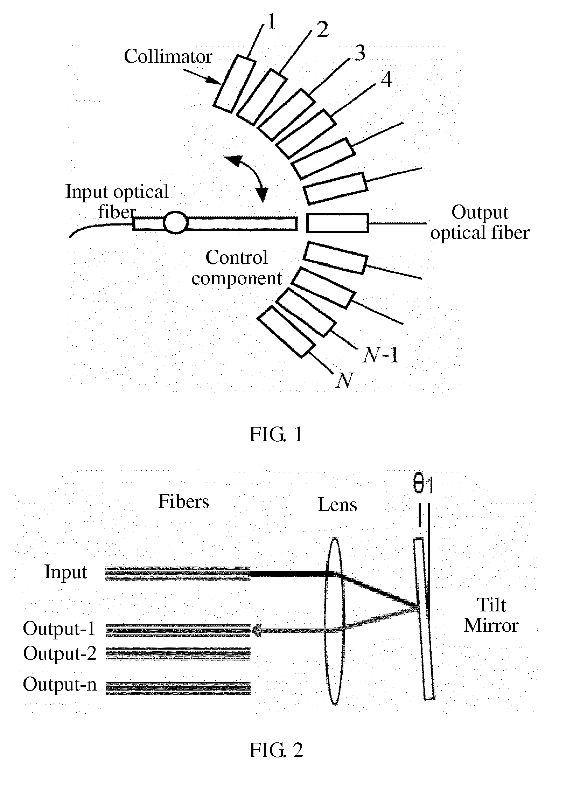

At present, the optical switch technology is mainly focused on a mechanical type and an MEMS (Micro Electro Mechanical Systems, micro electro mechanical systems) type, as individually shown in FIG. 1 and FIG. 2, in which, the mechanical type generally uses a control component such as a stepper motor to implement the selection of optical paths, such as controlling movements of an input optical fiber or movements of a reflecting mirror; while the MEMS type optical switch is mainly based on an MEMS reflecting mirror, which is a chip type reflecting mirror. A micro deflection of the MEMS reflecting mirror is achieved by controlling signals such as voltages or electric currents, so as to make an input light beam be transmitted at a specific angle back to a specific output port, thereby forming a 1×N optical switch.

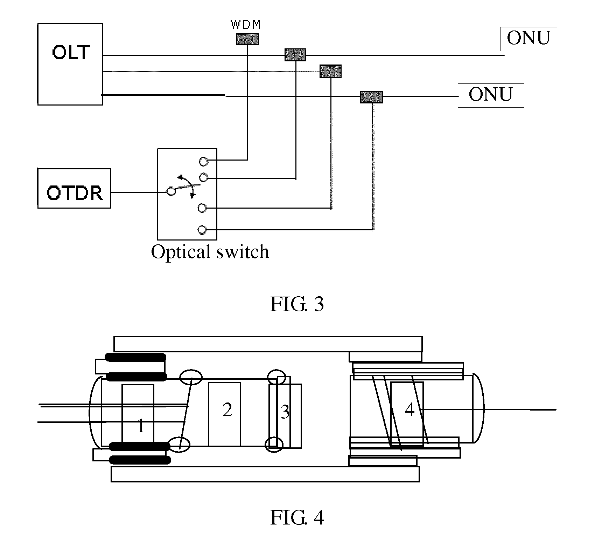

In the prior art, the optical switch is widely applied to detect performance of optical fiber link by adopting an OTDR (Optical Time Domain Reflectometer, optical time domain reflectometer). A WDM (Wavelength Division Multiplexing, wavelength division multiplexer) is further needed to couple test light emitted from the OTDR into a PON (Passive Optical Network, passive optical network). As shown in FIG. 3, the test light output by the OTDR is transmitted to the WDM through a certain channel in the 1xN optical switch, and through the WDM, the test light may be transmitted in a downlink direction until arriving at an ONU (Optical Network Unit, optical network unit), and the reflected test light passes through the WDM and the optical switch again and returns to the OTDR for test analyzing and processing.

As shown in FIG. 3, in a whole monitoring system, each branch of an optical switch is required to be connected to a WDM, that is, one 1×N optical switch needs to be connected to N WDMs; when N=128, the number of needed WDMs should be 128, therefore, not only the cost is high, but also the arrangement within limited machine room and framework resources is very difficult; meanwhile, because special components are needed to place discrete WDM devices, and undergo fiber jumping and splicing with optical fibers of other s, the reliability of the system becomes worse, the manufacturing difficulty increases, and the production efficiency decreases dramatically.

### SUMMARY OF THE INVENTION

Accordingly, embodiments of the present invention provide a wavelength division multiplexer, an optical switch device and a method for controlling an optical switch, so as to reduce the number of wavelength division multiplexers in an optical network.

An embodiment of the present invention provides a wavelength division multiplexer WDM, which includes three ports: a common port, a pass port and a reflection port; the common port, the pass port and the reflection port each include an optical fiber array and a micro lens array matching the optical fiber array; an optical signal output by any optical fiber in a first optical fiber array of the common port is transmitted to a filter after passing through a corresponding micro lens in a first micro lens array of the common port; transmitted light in the optical signal enters a corresponding micro lens in a second micro lens array of the pass port after passing through the filter, and then the light is output by a corresponding optical fiber in a second optical fiber array of the pass port; reflected light in the optical signal enters a corresponding micro lens in a third micro lens array of the reflection port after being reflected by the filter, and then the light is output by a corresponding optical fiber in a third optical fiber array of the reflection port.

An embodiment of the present invention further provides an optical switch device, which includes an optical fiber array, a micro lens array, a lens and a micro electro mechanical system MEMS reflecting mirror, in which, each micro lens in the micro lens array and each optical fiber in the optical fiber array are in one-to-one spatial position correspondence; an input optical signal is transmitted to a corresponding micro lens in the micro lens array through an input optical fiber in the optical fiber array, and then emitted from a central position of the lens to the MEMS reflecting mirror; the input optical signal is reflected to the lens by the MEMS reflecting mirror and transformed into parallel light which is in parallel with the optical axis of the lens; the parallel light is transmitted to a corresponding micro lens in the micro lens array, and output by a corresponding optical fiber in the optical fiber array.

An embodiment of the present invention further provides an optical path selection device, which includes: an arrayed WDM and a 1×N optical switch integrated with the arrayed WDM; where
the arrayed WDM includes three ports: a common port, a pass port and a reflection port, and the common port, the pass port and the reflection port each include an optical fiber array and a micro lens array matching the optical fiber array;
the 1×N optical switch includes an optical fiber array, a micro lens array, a lens and an MEMS reflecting mirror, and each micro lens in the micro lens array and each optical fiber in the optical fiber array are in one-to-one spatial position correspondence;
the optical fiber array in the 1×N optical switch is connected to the pass port or the reflection port in the arrayed WDM; an input optical signal is transmitted to a corresponding micro lens in the micro lens array of the 1×N optical switch through an input optical fiber in the optical fiber array of the 1×N optical switch, and then emitted from a central position of the lens to the MEMS reflecting mirror; the input optical signal is reflected to the lens by the MEMS reflecting mirror and transformed into parallel light which is in parallel with the optical axis of the lens, and the parallel light is transmitted to a corresponding micro lens in the micro lens array and output by a corresponding optical fiber in the optical fiber array, and then enters the pass port or the reflection port of the arrayed WDM; and
the output optical signal is transmitted to a matching micro lens through a corresponding optical fiber in the optical fiber array of the pass port or the reflection port of the arrayed WDM and then transmitted to a filter, then transmitted to a corresponding micro lens in the micro lens array of the common port after passing through the filter, and output by a corresponding optical fiber in the optical fiber array of the common port.

An embodiment of the present invention further provides a method for controlling an optical switch, which includes:
transmitting, by an optical fiber array of a 1×N optical switch, an input optical signal to a corresponding micro lens in a micro lens array of the 1×N optical switch, where the signal is emitted from a central position of a lens to an MEMS reflecting mirror; where the input optical signal is reflected to the lens by the MEMS reflecting mirror and transformed into parallel light which is in parallel with the optical axis of the lens; the parallel light is transmitted to a corresponding micro lens in the micro lens array and output by a corresponding optical fiber in the optical fiber array, and then enters a pass port or a reflection port of an arrayed WDM; the pass port, the reflection port and a common port of the arrayed WDM each include an optical fiber array and a micro lens array matching the optical fiber array, each micro lens in the micro lens array of the 1×N optical switch and each optical fiber in the optical fiber array of the 1×N optical switch are in one-to-one spatial position correspondence; and
transmitting, by a corresponding optical fiber in the optical fiber array of the pass port or the reflection port of the arrayed WDM, the output optical signal to a matching micro lens, where the signal is then transmitted to a filter, and transmitted to a corresponding micro lens in the micro lens array of the common port after passing through the filter, and output by a corresponding optical fiber in the optical fiber array of the common port.

Compared with the prior art, embodiments of the present invention integrate the ports of the WDM into an arrayed form including the optical fiber arrays and the micro lens arrays, use an optical fiber array to replace individual optical fibers, and use a micro lens array matching the optical fiber array, to achieve coupled transmission of optical wave input and output, so as to achieve the object that multiple discrete WDM devices are integrated into an arrayed WDM device, thereby greatly reducing the number of wavelength division multiplexers in an optical network.

### BRIEF DESCRIPTION OF THE DRAWINGS

To illustrate the technical solutions in the embodiments of the present invention more clearly, the following briefly describes the accompanying drawings required for describing the embodiments or the prior art. Apparently, the accompanying drawings in the following description merely show some embodiments of the present invention, and a person skilled in the art can derive other drawings from these accompanying drawings without creative efforts.

FIG. 1 is a schematic structural diagram of a mechanical type optical switch in the prior art;

FIG. 2 is a schematic structural diagram of an MEMS type optical switch in the prior art;

FIG. 3 is a schematic optical path diagram of using WDMs and an optical switch to perform PON optical path detection in the prior art;

FIG. 4 is a schematic structural diagram of a three-port WDM in the prior art;

FIG. 5 is a schematic structural diagram of a WDM provided by an embodiment of the present invention;

FIG. 6 is a schematic structural diagram of an optical switch device provided by an embodiment of the present invention;

FIG. 7 is a schematic optical path diagram of using an optical path selection device provided by an embodiment of the present invention to perform PON optical path detection; and

FIG. 8 is a flow chart of steps in a method for controlling an optical switch provided by an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by a person skilled in the art based on the embodiments of the present invention without creative efforts shall fall within the protection scope of the present invention.

Embodiments of the present invention provide a WDM, an optical switch device and a method for controlling an optical switch, so as to reduce the number of wavelength division multiplexers in an optical network.

To facilitate complete understanding of the technical solutions of the embodiments of the present invention, the following clearly and completely describes the technical solutions in the embodiments of the present invention with reference to the accompanying drawings in the embodiments of the present invention.

Firstly, a WDM provided by an embodiment of the present invention is described in the following.

In the prior art, a WDM is usually in a three-port form, and its structure is shown in FIG. 4. In FIG. 4, "1" represents a dual-core pin, that is, two fixed optical fibers, and therefore two optical ports are included, which are a common port (Com Port) and a reflection port (Reflection Port); "2" represents a self-focusing lens, used for optical wave coupling of the dual-core optical fibers in the "1"; "3" represents a dielectric film filter, used for transmission or reflection of optical waves of specific wavelengths; and "4" represents a single-core collimator, which may specifically be a single-core optical fiber, and the single-core collimator has a light beam focusing function and may act as a pass port (Pass Port). A working principle of the WDM is: an optical wave containing two or more wavelengths is input from the common port, and according to characteristics of wavelengths, a part of light is reflected and output from the reflection port at the component 3; and a part of the light is transmitted and output from the pass port at the component 3. Apparently, the WDM in the prior art is a discrete device.

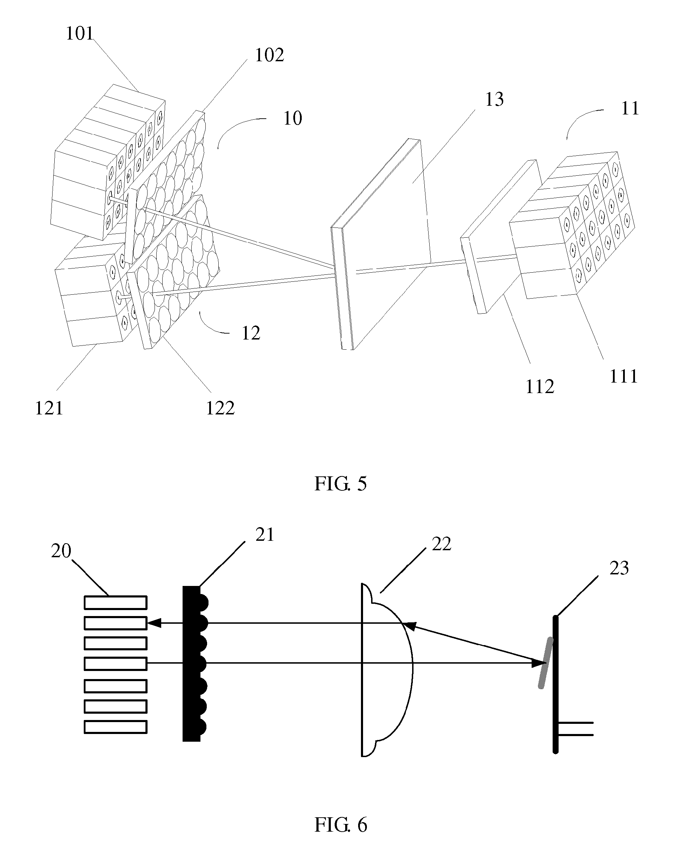

As shown in FIG. 5, which is a schematic structural diagram of a WDM provided by an embodiment of the present invention, in which, the WDM includes three ports: a common port 10, a pass port 11 and a reflection port 12; the three ports each include an optical fiber array and a micro lens array matching the optical fiber array; a first optical fiber array 101 and a first micro lens array 102 compose the common port; a second optical fiber array 111 and a second micro lens array 112 compose the pass port; and a third optical fiber array 121 and a third micro lens array 122 compose the reflection port; in which, an optical signal output by any optical fiber in the first optical fiber array 101 of the common port 10 is transmitted to a filter 13 after passing through a corresponding micro lens in the first micro lens array 102; transmitted light enters a corresponding micro lens in the second micro lens array 112 of the pass port 11 after passing through the filter 13, and then the light is output by a corresponding optical fiber in the second optical fiber array 111; reflected light enters a corresponding micro lens in the third micro lens array 122 of the reflection port 12 after being reflected by the filter 13, and then the light is output by a corresponding optical fiber in the third optical fiber array 121.

The embodiment of the present invention integrates the ports of the WDM into an arrayed form including the optical fiber arrays and the micro lens arrays, uses an optical fiber array to replace individual optical fibers, and uses a micro lens array matching the optical fiber array, to perform coupled transmission of optical wave input and output, so as to achieve the object that multiple discrete WDM devices are integrated into an arrayed WDM device, thereby greatly reducing the number of WDMs in an optical network.

It should be noted that, in specific implementation, to facilitate installation of the device, the optical fiber array and the micro lens array included in each port of the WDM are usually configured to be in one-dimensional forms or two-dimensional forms matching each other, that is, a one-dimensional optical fiber array and a one-dimensional micro lens array may be adopted, and a two-dimensional optical fiber array and a two-dimensional micro lens array may also be adopted according to actual application scenarios.

In the embodiment of the present invention, multiple independent optical fibers may be replaced with the optical fiber array, and meanwhile, multiple optical channels are formed. Each optical channel in the common port of the WDM is corresponding to only one optical channel in the reflection port and only one optical channel in the reflection port, and taking example of the two-dimensional optical fiber arrayed WDM, such as a 3x6 optical fiber arrayed WDM, 18 arrayed WDMs can be achieved synchronously.

Further, each micro lens in the micro lens array included by each port of the WDM and the corresponding optical fiber channel in a corresponding optical fiber array are in one-to-one correspondence. To facilitate the correspondence between each micro lens in the micro lens array and the corresponding optical fiber channel in the optical fiber array, it is generally configured that each micro lens in the micro lens array included by each port of the WDM and the corresponding optical fiber channel in the corresponding optical fiber array are in a spatially corresponding distribution form. Therefore, when an optical signal output by a certain optical fiber in the optical fiber array may directly enter the spatially corresponding micro lens of the optical fiber, the optical signal emitted from a certain micro lens in the micro lens array may also be directly coupled into the spatially corresponding single optical fiber of the micro lens.

It should be noted that, for the selection of the filter, a filter with a larger area may be used, so that multiple light beams output by the optical fiber array included by each port of the WDM may all be transmitted to the filter, and the selection of optical waves with respect to each port may be achieved on the filter.

Through the arrayed WDM provided by the embodiment of the present invention, N discrete WDM devices can be integrated into one WDM device, and the WDM device has an advantage of small size, so that the number of the WDM and the occupied space can be reduced.

Corresponding to the above arrayed WDM, an embodiment of the present invention further provides an optical switch device, as shown in FIG. 6, the switch device specifically includes: an optical fiber array 20, a micro lens array 21, a lens 22 and an MEMS reflecting mirror 23; each micro lens in the micro lens array 21 and each optical fiber in the optical fiber array 20 are in one-to-one spatial position correspondence; an input optical signal is transmitted to a corresponding micro lens in the micro lens array 21 after passing through the optical fiber array 20, and then is emitted from the central position of the lens 22 to the MEMS reflecting mirror 23. The input optical signal is reflected by the MEMS reflecting mirror 23, so that an output optical signal may be reflected to the lens 22 at a specific angle; the output optical signal is transformed by the lens 22 into parallel light which is in parallel with the optical axis of the lens, and then transmitted to a corresponding micro lens in the micro lens array 21, and output by a corresponding optical fiber in the optical fiber array 20.

It should be noted that, in the optical switch device provided in the embodiment of the present invention, its output optical fibers are arranged in an arrayed form, and in specific implementation, a one-dimensional optical fiber array may be used, or a two-dimensional optical fiber array may be used. Each micro lens in the micro lens array and the corresponding optical fiber channel in a corresponding optical fiber array are in one-to-one correspondence. To facilitate the correspondence between each micro lens in the micro lens array and the corresponding optical fiber channel in the optical fiber array, each micro lens in the micro lens array and the corresponding optical fiber channel in the corresponding optical fiber array are usually in a spatially corresponding distribution form.

Further, the input optical signal is an optical signal used for enabling the optical switch device, and generally, the input optical signal directly enters the central position, that is, the optical center of the lens, so that the optical fiber corresponding to the optical center position of the lens in the optical fiber array may act as a specific optical fiber for transmitting the input optical signal. The input optical signal enters the micro lens corresponding to the specific optical fiber in the micro lens array after being transmitted by the specific optical fiber; and the input optical signal passes through the lens and the MEMS reflecting mirror in turn after being emitted from the micro lens. The lens is a common optical lens, and it may be a single lens, or may also be a lens group formed of multiple lenses, and may further be a spherical lens or an aspherical lens, which is not specifically limited by the embodiment of the present invention, and a person skilled in the art can set a specific lens according to actual application scenarios. The MEMS reflecting mirror is a chip type reflecting mirror; when the input optical signal emitted from the lens enters the center of the MEMS reflecting mirror, a micro deflection of the MEMS reflecting mirror can be achieved by controlling signals such as voltages or electric currents, so that the output light can be reflected at a specific angle and reflected to the lens; the reflected light is transformed by the lens into parallel light which is in parallel with the optical axis of the lens, and then enters a corresponding micro lens in the micro lens array, and then the light is output by the optical fiber corresponding to the micro lens, that is, by performing optical path selection, the output optical signal can be output by a specific optical fiber, so as to enable the optical channel corresponding to the optical fiber and form a 1×N optical switch which is capable of selecting N optical paths.

An embodiment of the present invention further provides an optical path selection device; the optical path selection device is integrated with an arrayed WDM device and an optical switch device, and may specifically include: an arrayed WDM and a 1×N optical switch integrated with the arrayed WDM.

The arrayed WDM includes three ports: a common port, a pass port and a reflection port, and the three ports each include an optical fiber array and a micro lens array matching the optical fiber array, as shown in FIG. 5.

The 1×N optical switch includes an optical fiber array, a micro lens array, a lens and an MEMS reflecting mirror, and each micro lens in the micro lens array and each optical fiber in the optical fiber array are in one-to-one spatial position correspondence, as shown in FIG. 6.

The optical fiber array in the 1×N optical switch is connected to the pass port or the reflection port in the arrayed WDM, an input optical signal is transmitted to a corresponding micro lens in the micro lens array of the 1×N optical switch through an input optical fiber in the optical fiber array of the 1×N optical switch, and then is emitted from the central position of the lens to the MEMS reflecting mirror, and the input optical signal is reflected to the lens by the MEMS reflecting mirror and transformed into parallel light which is in parallel with the optical axis of the lens,. The parallel light is transmitted to a corresponding micro lens in the micro lens array and output by a corresponding optical fiber in the optical fiber array, and then enters the pass port or the reflection port of the arrayed WDM.

The output optical signal is transmitted to a matching micro lens through a corresponding optical fiber in the optical fiber array of the pass port or the reflection port of the arrayed WDM, then transmitted to a filter, then the signal is transmitted to a corresponding micro lens in the micro lens array of the common port after passing through the filter, and output by a corresponding optical fiber in the optical fiber array of the common port.

In the embodiment of the present invention, both the optical switch and the WDM are arrayed devices, and the optical fiber arrays of the two match each other, for example, the arrays are M×N optical fiber arrays; the output optical fiber array of the optical switch is directly connected to and fixed on the optical fiber array of the reflection port or the pass port of the arrayed WDM, such as: using a connecting way of splicing, so as to achieve the integration of the optical switch and the WDM. Because process parameters of the filter are different in respect of optical wave characteristics of transmission and reflection, such as the transmission efficiency and the emitting efficiency are different, different ports of the WDM may be selected and connected according to different network situations. It may be seen that, the optical switch device and the WDM device in the optical path selection device can be directly abutted through an optical fiber array, so that the optical fiber management between the discrete WDM and the optical switch can be eliminated; further, integrating the WDM to the optical switch makes setting an installation position of the discrete WDM in the optical network unnecessary, so that the production and manufacturing difficulty can be greatly reduced, and the production efficiency can be improved.

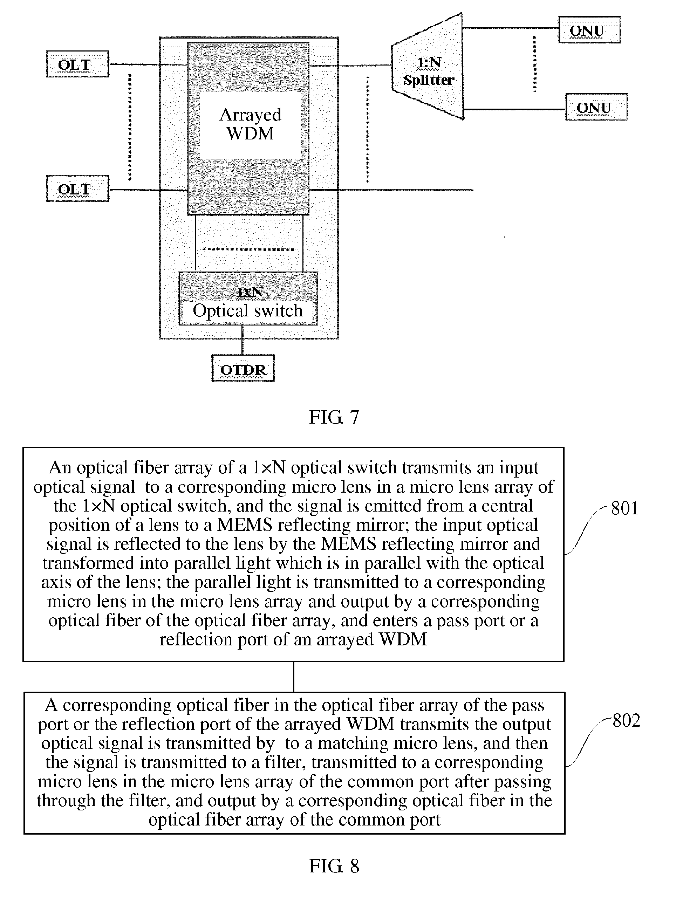

The optical path selection device integrated with the arrayed WDM and the optical switch has only one input optical fiber of the optical switch and the optical fiber arrays of two ports of the WDM for external connection. The PON network is still taken as an example, as shown in FIG. 7, a single input optical fiber of an optical path selection device is connected to an OTDR, the OTDR generates an input optical signal, an optical fiber array on a common port of an arrayed WDM may be connected to a line of a downlink ONU by a splitter (the 1: N Splitter in the figure), an optical fiber array of a reflection port or a pass port is connected to a line of an uplink OLT. Therefore, by performing optical path selection, the OTDR may perform link performance detection on each optical path in the PON network.

Detailed content of the arrayed WDM and the optical switch may refer to related content in the above embodiments, and is not described herein again.

For any optical switch using the optical fiber array as the output port, the arrayed WDM can be integrated into the optical switch, as long as the optical fiber arrays of the two match.

The technical solution is not only applicable to the MEMS optical switch, but also applicable to other various optical switches. Only if the output optical fibers of the optical switch are arrayed, and the array matches the optical fiber array of the arrayed WDM device, the optical switch device can always be integrated with the arrayed WDM.

Accordingly, an embodiment of the present invention provides a method for controlling an optical switch, and as shown in FIG. 8, which is a flowchart of steps of the method, the method may include the following steps:

Step 801: An optical fiber array of a 1×N optical switch transmits an input optical signal to a corresponding micro lens in a micro lens array of the 1×N optical switch. The signal is emitted from a central position of a lens to an MEMS reflecting mirror; where the input optical signal is reflected to the lens by the MEMS reflecting mirror and transformed into parallel light which is in parallel with the optical axis of the lens; the parallel light is transmitted to a corresponding micro lens in the micro lens array and output by a corresponding optical fiber of the optical fiber array, and enters a pass port or a reflection port of an arrayed WDM;

The pass port, the reflection port and the common port of the arrayed WDM each include an optical fiber array and a micro lens array matching the optical fiber array; each micro lens in the micro lens array of the 1×N optical switch and each optical fiber in the optical fiber array of the 1×N optical switch are in one-to-one spatial position correspondence;

Step 802: A corresponding optical fiber in the optical fiber array of the pass port or the reflection port of the arrayed WDM transmits the output optical signal to a matching micro lens, then transmitted to a filter, and then the signal is transmitted to a corresponding micro lens in the micro lens array of the common port after passing through the filter, and output by a corresponding optical fiber in the optical fiber array of the common port.

The optical fiber array in the 1×N optical switch and the optical fiber array of the pass port or the reflection port in the arrayed WDM are in one-dimensional forms or two-dimensional forms matching each other, and the optical switch and the optical fiber arrays in the WDM match each other.

In the embodiment of the present invention, the ports of the WDM are integrated into an arrayed form including the optical fiber arrays and the micro lens arrays, an optical fiber array is used to replace individual optical fibers, and a micro lens array matching the optical fiber array is used for coupled transmission of optical wave input and output, so as to achieve the object that multiple discrete WDM devices are integrated into an arrayed WDM device, thereby greatly reducing the number of WDMs in an optical network. Further, because the optical switch is also an arrayed device, when an optical fiber array thereof and the optical fiber arrays in the WDM match each other, the optical switch device and the WDM device may be directly abutted through the optical fiber array, so that the optical fiber management between the discrete WDM and the optical switch can be eliminated. By performing the optical path selection of the optical switch device, the output optical signal is transmitted to the WDM, and output from a corresponding port of the WDM.

The method embodiments corresponding to the apparatus embodiments are described briefly herein because the relevant content can be derived from the apparatus embodiments. The described apparatus embodiments are merely exemplary. The units described as separate parts may or may not be physically separate, and parts displayed as units may or may not be physical units, may be located in one position, or may be distributed on multiple network elements. A part of or all of the modules may be selected according to the actual needs to achieve the objectives of the solutions of the embodiments. A person skilled in the art may understand and implement the embodiment without creative efforts.

A person skilled in the art should understand that all or a part of the processes of the methods in the embodiments of may be implemented by a computer program instructing relevant hardware. The program may be stored in a computer readable storage medium. When the program is run, the processes of the method in the embodiments are performed. The storage medium may be a magnetic disk, an optical disk, a Read-Only Memory (Read-Only Memory, ROM), a Random Access Memory (Read-Only Memory, RAM), and the like.

The preceding description disclosed in the embodiments enables a person skilled in the art to implement or use the present invention. Multiple types of modifications to the embodiments are obvious to a person skilled in the art, and general principles defined herein may be implemented in other embodiments without departing from the spirit or scope of the embodiments of the present invention. Therefore, the embodiments of the present invention will not be limited to the embodiments illustrated herein but will fall within the broadest scope in line with the principle and novel features herein.

## Claims

1. A wavelength division multiplexer, WDM, comprising three ports: a common port, a pass port and a reflection port, wherein the common port, the pass port and the reflection port each comprise an optical fiber array and a micro lens array matching the optical fiber array; an optical signal output by any optical fiber in a first optical fiber array of the common port is transmitted to a filter after passing through a corresponding micro lens in a first micro lens array of the common port, transmitted light in the optical signal enters a corresponding micro lens in a second micro lens array of the pass port after passing through the filter, and then the light is output by a corresponding optical fiber in a second optical fiber array of the pass port; and reflected light in the optical signal enters a corresponding micro lens in a third micro lens array of the reflection port after being reflected by the filter, and then the light is output by a corresponding optical fiber in a third optical fiber array of the reflection port.

2. The WDM according to claim 1, wherein the optical fiber arrays and the micro lens arrays of the common port, the pass port and the reflection port are in one-dimensional forms or two-dimensional forms matching each other.

3. An optical switch device, comprising an optical fiber array, a micro lens array, a lens and a micro electro mechanical system, MEMS, reflecting mirror, wherein each micro lens in the micro lens array and each optical fiber in the optical fiber array are in one-to-one spatial position correspondence; an input optical signal is transmitted to a corresponding micro lens in the micro lens array through an input optical fiber in the optical fiber array, and then emitted from a central position of the lens to the MEMS reflecting mirror; the input optical signal is reflected to the lens by the MEMS reflecting mirror and transformed into parallel light which is in parallel with an optical axis of the lens; the parallel light is transmitted to a corresponding micro lens in the micro lens array, and output by a corresponding optical fiber in the optical fiber array.

4. The optical switch according to claim 3, wherein the input optical signal is transmitted to a matching micro lens in the micro lens array through an input optical fiber in a middle position of the optical fiber array.

5. The optical switch according to claim 3 or 4, wherein the optical fiber array and the micro lens array are in one-dimensional forms or two-dimensional forms matching each other.

6. An optical path selection device, comprising an arrayed wavelength division multiplexer, WDM, and a 1×N optical switch integrated with the arrayed WDM, wherein
the arrayed WDM comprises three ports: a common port, a pass port and a reflection port, and the common port, the pass port and the reflection port each comprise an optical fiber array and a micro lens array matching the optical fiber array;
the 1×N optical switch comprises an optical fiber array, a micro lens array, a lens and an MEMS reflecting mirror, and each micro lens in the micro lens array and each optical fiber in the optical fiber array are in one-to-one spatial position correspondence;
the optical fiber array in the 1×N optical switch is connected to the pass port or the reflection port in the arrayed WDM; an input optical signal is transmitted to a corresponding micro lens in the micro lens array of the 1×N optical switch through an input optical fiber in the optical fiber array of the 1×N optical switch, and then emitted from a central position of the lens to the MEMS reflecting mirror; the input optical signal is reflected to the lens by the MEMS reflecting mirror and transformed into parallel light which is in parallel with an optical axis of the lens, and the parallel light is transmitted to a corresponding micro lens in the micro lens array and output by a corresponding optical fiber in the optical fiber array, and then enters the pass port or the reflection port of the arrayed WDM; and
the output optical signal is transmitted to a matching micro lens through a corresponding optical fiber in the optical fiber array of the pass port or the reflection port of the arrayed WDM and then transmitted to a filter, then transmitted to a corresponding micro lens in the micro lens array of the common port after passing through the filter, and output by a corresponding optical fiber in the optical fiber array of the common port.

7. The optical path selection device according to claim 6, wherein the input optical signal is transmitted to a matching micro lens in the micro lens array of the 1×N optical switch through an input optical fiber in a middle position of the optical fiber array of the 1×N optical switch.

8. The optical path selection device according to claim 6, wherein the optical fiber array of the 1×N optical switch and the optical fiber array of the pass port or the reflection port of the arrayed WDM are in one-dimensional forms or two-dimensional forms matching each other.

9. A method for controlling an optical switch, comprising:
transmitting, by an optical fiber array of a 1×N optical switch, an input optical signal to a corresponding micro lens in a micro lens array of the 1×N optical switch, wherein the signal is emitted from a central position of a lens to an micro electro mechanical system, MEMS, reflecting mirror; wherein the input optical signal is reflected to the lens by the MEMS reflecting mirror and transformed into parallel light which is in parallel with the optical axis of the lens; the parallel light is transmitted to a corresponding micro lens in the micro lens array and output by a corresponding optical fiber in the optical fiber array, and then enters a pass port or a reflection port of an arrayed wavelength division multiplexer, WDM; the pass port, the reflection port and a common port of the arrayed WDM each comprise an optical fiber array and a micro lens array matching the optical fiber array, each micro lens in the micro lens array of the 1×N optical switch and each optical fiber in the optical fiber array of the 1×N optical switch are in one-to-one spatial position correspondence; and
transmitting, by a corresponding optical fiber in the optical fiber array of the pass port or the reflection port of the arrayed WDM, the output optical signal to a matching micro lens, wherein the signal is then transmitted to a filter, transmitted to a corresponding micro lens in the micro lens array of the common port after passing through the filter, and output by a corresponding optical fiber in the optical fiber array of the common port.

10. The method for controlling an optical switch according to claim 9, wherein the optical fiber array of the 1×N optical switch and the optical fiber array of the pass port or the reflection port in the arrayed WDM are in one-dimensional forms or two-dimensional forms matching each other.
